Europäisches Patentamt

European Patent Office

Office européen des brevets

(11) Publication number: **0 272 090 B1**

# EUROPEAN PATENT SPECIFICATION

(45) Date of publication of patent specification: **01.04.92**   (51) Int. Cl.⁵: **G11B 27/10**, G11B 7/08, G11B 27/34

(21) Application number: **87311038.1**

(22) Date of filing: **15.12.87**

(54) **Address search method for video disk player or the like.**

(30) Priority: **15.12.86 JP 299385/86**

(43) Date of publication of application:
**22.06.88 Bulletin 88/25**

(45) Publication of the grant of the patent:
**01.04.92 Bulletin 92/14**

(84) Designated Contracting States:
**DE FR GB**

(56) References cited:
FR-A- 2 490 389        GB-A- 2 083 267
GB-A- 2 102 615        GB-A- 2 119 964
NL-A- 8 403 689        US-A- 3 119 987

PATENT ABSTRACTS OF JAPAN vol. 8, no.
23 (P-251) 1460 31 January 1984, & JP-A-58
179974 (NIPPON GAKKI SEIZO K.K.)

PATENT ABSTRACTS OF JAPAN vol. 9, no.
182 (P-376) 1905 27 July 1985, & JP-A-60
052966 (TOSHIBA K.K.)

PATENT ABSTRACTS OF JAPAN vol. 5, no.
107 (P-70) 779 11 July 1981, & JP-A-56 051067
(TOKYO SHIBAURA DENKI K.K.)

PATENT ABSTRACTS OF JAPAN vol. 8, no.
141 (P-283) 1578 30 June 1984, & JP-A-59
040362 (TOKYO SHIBAURA DENKI K.K.)

PATENT ABSTRACTS OF JAPAN vol. 9, no.
221 (P-386) 1944 07 September 1985, & JP-
A-60 080166 (SONY K.K.)

(73) Proprietor: **PIONEER ELECTRONIC CORPORA-
TION**
**Tokorozawa Works No. 2610, Hanazono
4-chome
Tokorozawa-shi Saitama(JP)**

(72) Inventor: **Akiyama, Toru c/o Pioneer Electron-
ic Corporation
Tokorozawa Works No. 2610 Hanazono
4-chome
Tokorozawa-shi Saitama(JP)**

(74) Representative: **Brunner, Michael John et al
GILL JENNINGS & EVERY 53-64 Chancery
Lane
London WC2A 1HN(GB)**

## Description

The present invention relates to an address search method for an information reproducing apparatus such as a video disk player.

The frame is employed as the basic unit of information recorded on a video disk. The frames are numbered and the frame numbers used as start addresses for reading selected data from the disk. That is, to start reproduction of information from the disk at a location designated by a frame number, a pickup head of the player is driven to a position on the disk surface corresponding to the frame number.

The user inputs a search command in the form of the frame number from a keyboard on the body of the player or with a remote control unit or the like. For example, to start play at frame number 12345, the user presses the keys "1", "2", "3", "4", and "5" in that order, and then depresses a search start key to generate a search start command. Upon receipt of the search start command, the pickup is driven by a tracking control circuit to move the reading point of the pickup to the position corresponding to the designated frame number.

The time required to move the pickup to the reading start position from the rest position is generally greater than the time needed by the user to input the frame number and depress the search start key. It is desirable to shorten the overall time needed to complete the search operation.

Accordingly, it is an object of the invention to provide a method of searching for a designated reading position in which the time from depression of the search start key until playing is commenced is shortened.

In satisfaction of the above and other objects, the present invention provides a method for searching for a start address in a video disk player or the like in which advantage is taken of the fact that the address digits inputted by the user decline in significance in the order in which they are inputted. Accordingly, after the inputting of each digit, the pickup is moved to an address region corresponding to that digit. Hence, by the time the least significant digit is inputted, the pickup is already located in a region of the disk close to the target address, and therefore only a short time is needed to complete the movement of the pickup to the target address and to commence playing starting at that address.

In the attached drawings:

Fig. 1 is a block diagram of a tracking servo system of a video disk player to which the address search method of the present invention is applied; and

Figs. 2A and 2B are flowcharts showing steps in a preferred embodiment of an address reading method of the invention.

Preferred embodiments of the invention will now be described with reference to the accompanying drawings.

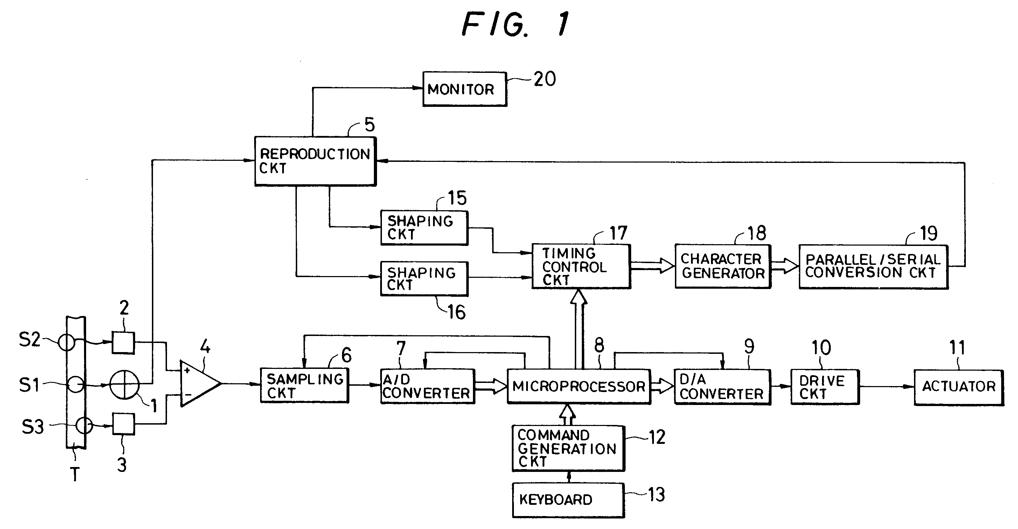

Fig. 1 is a block diagram of a tracking servo system of a video disk player to which the address search method of the present invention is applied. The pickup of the player produces three reading beam spots, namely, a recorded information reading spot S1 and a pair of tracking information detecting spots S2 and S3, the tracking information reading spots S2 and S3 preceding and following the recorded information reading spot S1 during the playing of the disk. The beams spots S1, S2 and S3 are directed onto the recorded track of the disk with a positional relationship as depicted in Fig. 1. Reflected light from the three spots is received by respective photoelectric detectors 1, 2 and 3.

The light-receiving surface of the detector 1 is constituted by four light-detecting elements which operate independently of one another and which are divided by thin straight lines perpendicularly intersecting each other. The sum of the outputs of the four light-detecting elements is supplied as an output reproduced RF (radio frequency) signal to a video reproducing circuit 5.

The outputs from the detectors 2 and 3 are applied to a differential amplifier 4, which outputs a signal representing the difference between the signals from the two detectors 2 and 3. That is, the output from the differential amplifier 4 forms a tracking error signal. The tracking error signal from the amplifier 4 is supplied to a microprocessor 8 through a sampling circuit 6 and an A/D (analog/digital) converter 7. From the tracking error signal, the microprocessor 8 computes driving data used for operating the tracking servo circuit, which data is applied through a D/A (digital/analog) converter 9 to a drive circuit 10. A driving force corresponding to the input voltage to the drive circuit is applied to an actuator 11 by the drive circuit to move the pickup such that the information reading spot S1 is moved in the radial direction of the disk to cause it to precisely follow the recording track T.

A command generation circuit 12 responds to commands entered by manipulation of a keyboard 13 to supply the microprocessor with commands corresponding to the depressed keys.

The microprocessor 8 supplies a sampling timing pulse signal, an A/D conversion timing pulse signal, and a D/A conversion pulse signal to the sampling circuit 6, the A/D converter 7, and the D/A converter 9, respectively.

The video reproduction circuit 5 demodulates the video signal from the RF signal derived directly from the information recorded on the disk. Horizontal and vertical synchronizing signals are extracted from the video signal and supplied to a timing control circuit 17 through shaping circuits 15 and 16. The timing control circuit, which is composed of a counter and a logic circuit, detects the scanning position of the electron beam of the cathode-ray tube (not shown) of a monitor 20 in response to the output pulses from the shaping circuits 15 and 16 and clock pulses from a clock pulse generation circuit (not shown) to supply a read signal to a character generator 18 to indicate the frame number of the presently scanned position in accordance with frame display data supplied by the microprocessor 8.

Data indicative of addresses read from the character generator 18 are supplied to the video reproduction circuit 5 through a parallel/serial converter 19, which converts parallel data from the character generator 18 into serial data at a rate determined by the clock pulses applied thereto. The video reproduction circuit 5 synthesizes the video signal with the serial data and sends the synthesized video signal to the monitor 20.

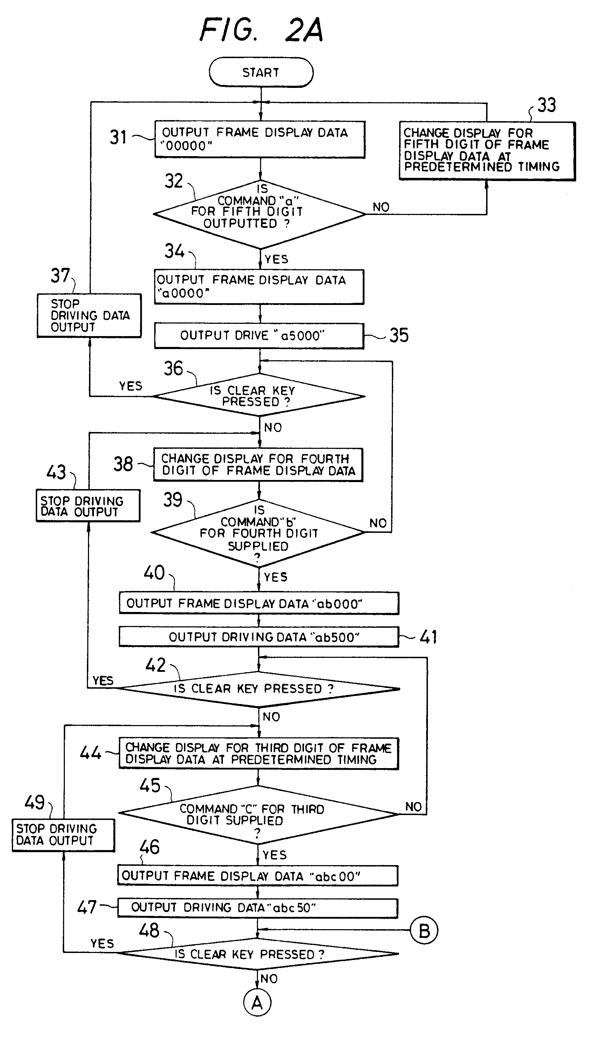

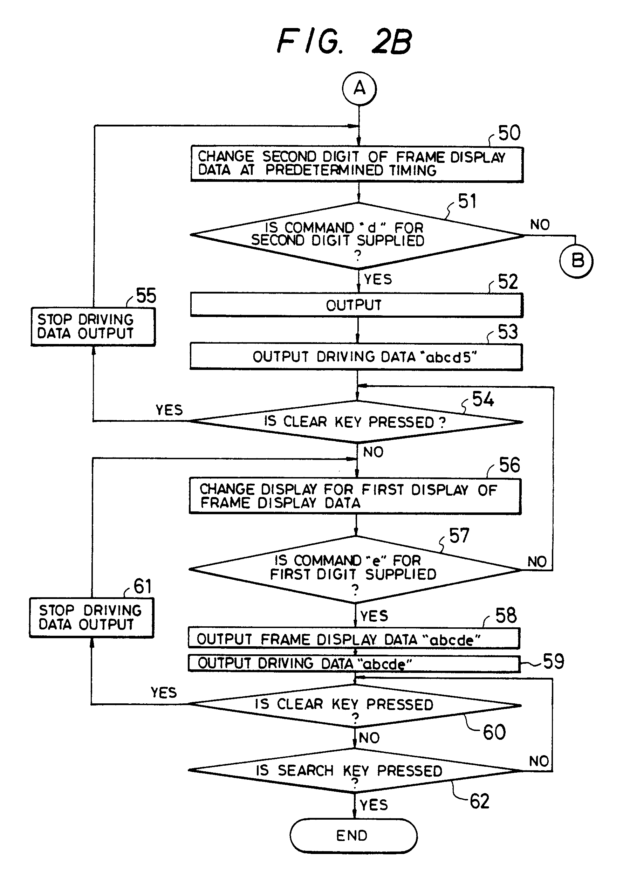

Steps of a specific preferred embodiment of an address search method of the invention will now be described with reference to the flowcharts of Figs. 2A and 2B.

When a frame key of the keyboard 13 is depressed, a search command is issued from the command generation circuit 12 to the microprocessor 8 to cause the latter to commence a search operation. The microprocessor first supplies frame display data "00000" to the timing control circuit 17 in a step 31, and determines in a step 32 whether or not a command for the fifth digit (the most significant digit) of a frame number has been supplied from the command generation circuit 12 by depression of any of the ten digit keys of the keyboard 13. When it is judged in step 32 that the command for the fifth digit has not been supplied from the command generation circuit, the color for the fifth digit of the frame display data and that for the background around the fifth digit are interchanged with a prescribed timing in a step 33. The frame display data are then supplied to the timing control circuit 17 in step 31 once more. As a result, "00000" is continuously displayed at a prescribed position on the screen of the cathode-ray tube until a command for the fifth digit is produced upon the depression of a key on the keyboard 13. The fifth digit (leftmost digit position) of "00000" is blinked at a predetermined rate to indicate to the user the readiness of the player to accept entry of the fifth digit of the search address.

When a digit command "a" (a = 1, 2, ..., 8 or 9) is entered, frame display data "a0000" are applied to the timing control circuit 17 in a step 34, and data for driving the pickup to a frame number "a5000" are transmitted to the D/A converter 9 in a step 35. The drive circuit 10 drives the actuator 11 in accordance with the output voltage from the D/A converter 9, to move the recorded information reading spot S1 to a position on the disk corresponding to the frame number "a5000".

It is then determined in a step 36 from the output of the command generation circuit 12 whether or not the clear key on the keyboard 13 has been pressed. If it is judged in step 36 that the clear key has been pressed, the outputting of the driving data is halted in step 37 and the process returns to step 31 where the frame number can again be entered starting from the fifth digit. When it is judged in step 36 that the clear key has not been depressed, the color for the fourth digit of the frame display data and that for the background around the fourth digit are interchanged at a prescribed timing, and the frame display data are supplied to the timing control circuit 17 in a step 38 to cause the fourth digit to blink.

It is then determined in a step 39 whether or not a command for the fourth digit has been supplied from the command generation circuit 12 by depression of any of the digit keys of the keyboard 13. If it is judged in step 39 that the command for the fourth digit has not been produced, step 36 is again executed. When it is determined in step 39 that the command "b" (b = 0, 1, 2, ..., 8 or 9) has been entered, frame display data "ab000" are supplied to the timing control circuit 17 in a step 40, and data for driving the pickup to a frame number "ab500" are applied to the D/A converter 9 in a step 41 to move the recorded information reading spot S1 to a position on the disk corresponding to the frame number "ab500".

It is then determined in a step 42 from the output of the command generation circuit 12 whether or not the clear key on the keyboard 13 has been pressed. If it is judged in step 42 that the clear key has been pressed, the outputting of the driving data is halted in step 43 and the process returns to step 38 where the frame number can again be entered starting from the fifth digit. When it is judged in step 42 that the clear key has not been depressed, the color for the third digit of the frame display data and that for the background around the third digit are interchanged at a prescribed timing, and the frame display data are supplied to the timing control circuit 17 in a step 44 to cause the third digit to blink.

It is then determined in a step 45 whether or not a command for the third digit has been supplied from the command generation circuit 12 by depression of any of the digit keys of the keyboard 13. When it is judged in step 45 that the command for the third digit has not been produced, step 42 is again executed. When it is determined in step 45 that the command "c" (c = 0, 1, 2, ..., 8 or 9) has been entered, frame display data "abc00" are supplied to the timing control circuit 17 in a step 40, and data for driving the pickup to a frame number "abc50" are applied to the D/A converter 9 in a step 47 to move the recorded information reading spot S1 to a position on the disk corresponding to the frame number "abc50".

In steps 48 through 61, entry of the second and first digits is processed in the same manner described above. When a command "d" (d = 0, 1, ..., 8 or 9) for the second digit is supplied, frame display data "abcd0" are supplied to the timing control circuit 17 in a step 52, and data for driving the pickup to a frame number "abcd5" are applied to the D/A converter 9 in step 53. The drive circuit drives the actuator 11 depending on the output voltage of the D/A converter 9 to move the recorded information reading spot S1 to a position on the disk corresponding to the frame number "abcd5". Subsequently, when a command "e" for the first digit is supplied to the timing control circuit 17 in step 58, data for driving the pickup to a frame number "abcde" are applied to the D/A converter in step 59. The drive circuit 10 then drives the actuator in accordance with the output voltage of the D/A converter 9 to move the information reading spot S1 to a position on the disk corresponding to the frame number "abcde".

If the clear key has not been depressed by step 60, the microprocessor determines in step 62 whether or not the search key has been depressed. If it has, the search operation is terminated.

That is, if a playing start position corresponding to a frame number "12345" is to be searched for, the recorded information reading spot S1 is first moved to a position on the disk corresponding to the frame number "15000" immediately after depression of the "1" key on the keyboard 13. When the digit key "2" is subsequently depressed, the spot S1 is moved to a position on the disk corresponding to the frame number "12500", when the digit key "3" is depressed, the spot S1 is moved to a position corresponding to the frame number "12350", and when the digit key "4" is depressed, the spot S1 is moved to a position corresponding to the frame number "12345". Finally, when the last digit key "5" is depressed, the spot S1 is already at the position corresponding to the frame number "12345", and hence no further movement toward the start position is needed. Even in the case though where the last digit entered is not a "5", the remaining distance to the target position will be so small that the time required to reach the target position will be very short.

In the above-described embodiment, each time a new digit is entered, the next less significant digit in the search address is set to "5", for example, "a5000" when the fifth digit is entered. However, the invention is not limited to this case and the next less significant digit can be set to a different value.

Furthermore, although the above-described embodiment relates to a video disk of the constant angular velocity type in which each read address is determined by a frame number, the invention can be applied as well to a constant linear velocity type disk in which positions on the disk are designated in terms of playing time (hours, minutes, and seconds) from the beginning of the disk.

Still further, although in the above-described embodiment the next digit to be inputted is blinked on the cathode-ray tube screen, it is also possible to provide on the keyboard significance keys for each digit of the frame number and the significance keys manipulated to indicate the significance of each digit entered.

Also, it should be noted that the present invention is applicable as well to other types of information reproducing apparatuses, for example, a tape recorder or a compact disk player.

In the inventive address search method, immediately after the depression in sequence of each key used to enter a target address in the order of most significant to least significant digits, the pickup is moved to a frame number corresponding to the previously entered digits. As a result, the total time required to reach the target address is significantly shortened. In fact, arrival at the target address occurs almost instantaneously upon entry of the last digit of the address.

Since no hardware modifications (other than the data in a program ROM or the like) need be made to implement the invention, the cost of the player is not increased.

## Claims

1. A method of searching for a target address on an information recording medium, comprising the steps of:

   entering digits of the target address in the order of most significant to least significant; and

   upon the entry of each digit of the target address, positioning an information reading point of an information reading means relative to the information recording medium at an address region on the information recording medium defined by the digit and all previously entered more significant digits.

2. A method according to claim 1, wherein the step of relatively positioning the information reading point comprises relatively positioning the information reading point at an address region defined by the digit and all previously entered more significant digits and a next subsequent less significant digit of a predetermined value.

3. A method according to claim 1 or claim 2, further comprising the step of displaying each digit as it is entered on a visual display device.

4. A method according to claim 3, further comprising the step of blinking on the visual display device a visual indicator for the next subsequent digit to be entered.

5. A method according to any of the preceding claims, applied to a video disk player.

6. A video disk player having a keyboard (13) for entry of digits representing a track address; an information reading point (S1); means (9,10,11) for moving the information reading point over the surface of a video disk; and means (8) for controlling the moving means (9,10,11) such that upon the entry of each digit of the target address, the information reading point is positioned relative to the information recording medium at an address region on the video disk defined by the digit and all previously entered more significant digits.

## Revendications

1. Procédé de recherche d'une adresse visée sur un support d'enregistrement d'information, comprenant les étapes suivantes :

    saisie des chiffres de l'adresse visée dans l'ordre du plus significatif au moins significatif , et

    lors de la saisie de chaque chiffre de l'adresse visée, positionnement d'un point de lecture d'information d'un moyen de lecture d'information relativement au support d'enregistrement d'information à une région d'adresse sur le support d'enregistrement d'information définie par le chiffre et par tous les chiffres plus significatifs déjà saisis.

2. Procédé selon la revendication 1, dans lequel l'étape de positionnement relatif du point de lecture de l'information comporte le positionnement relatif du point de lecture de l'information à une région d'adresse définie par le chiffre et tous les chiffres plus significatifs déjà saisis et un chiffre suivant moins significatif de valeur prédéterminée.

3. Procédé selon la revendication 1 ou la revendication 2, comprenant en outre l'étape d'affichage de chaque chiffre tel qu'il est saisi sur un dispositif d'affichage visuel.

4. Procédé selon la revendication 3, comprenant en outre l'étape de clignotement sur le dispositif d'affichage visuel d'un indicateur visuel pour le prochain chiffre consécutif à saisir.

5. Procédé selon l'une quelconque des revendications précédentes, appliqué à un lecteur de disque vidéo.

6. Lecteur de disque vidéo comportant un clavier (13) pour la saisie des chiffres représentant une adresse de piste ; un point de lecture d'information (S1) ; un moyen (9, 10, 11) pour déplacer le point de lecture d'information sur la surface d'un disque vidéo ; et un moyen (8) pour commander le moyen de déplacement (9, 10, 11) de telle sorte que, lors de la saisie de chaque chiffre de l'adresse visée, le point de lecture de l'information est positionné relativement au support d'enregistrement d'information à une région d'adresse sur le disque vidéo définie par le chiffre et tous les chiffres plus significatifs déjà saisis.

## Patentansprüche

1. Verfahren zum Suchen einer Zieladresse auf einem Aufzeichnungsträger für Informationen mit den folgenden Schritten:

    Digits der Zieladresse der Reihe nach von dem höchsten zum niedrigsten einzugeben und

    bei der Eingabe jedes Digits der Zieladresse einen Informations-Lesepunkt einer Informations-Leseeinrichtung relativ zu dem Aufzeichnungsträger für die Informationen in dem Adressenbereich des Aufzeichnungsträgers in die richtige Lage zu bringen, der von dem Digit und allen zuvor eingegebenen, höheren Digits festgelegt wird.

2. Verfahren gemäß Anspruch 1, bei dem in dem Schritt, den Informations-Lesepunkt in die richtige, relative Lage zu bringen, der Informations-Lesepunkt in die richtige, relative Lage in einem Adressenbereich gebracht wird, der von dem Digit und allen zuvor eingegebenen, höheren Digits sowie von einem als nächstes nachfolgenden, niedrigeren Digit von vorgegebenem Wert festgelegt wird.

3. Verfahren gemäß Anspruch 1 oder Anspruch 2, bei dem ferner jedes Digit bei seiner Eingabe in ein visuelles Vorführgerät zur Schau gestellt wird.

4. Verfahren gemäß Anspruch 3, bei dem ferner auf dem visuellen Vorführgerät ein visueller Anzeiger für das als nächstes nachfolgend einzugebende Digit zum Blinken gebracht wird.

5. Verfahren gemäß einem der vorhergehenden Ansprüche, das für einen Video-Plattenspieler angewendet wird.

6. Video-Plattenspieler mit einer Tastatur (13) zur Eingabe von Digits, die eine Spuradresse wiedergeben, mit einem Informations-Lesepunkt (S1), mit einer Einrichtung (9, 10, 11) zur Bewegung des Informations-Lesepunktes über die Oberfläche einer Videoplatte und mit Hilfsmitteln (8) zur Steuerung der der Bewegung dienenden Einrichtung (9, 10, 11) in der Weise, daß bei der Eingabe jedes Digits der Zieladresse der Informations-Lesepunkt relativ zum Aufzeichnungsträger für die Informationen in einem Adressenbereich der Videoplatte in die richtige Lage gebracht wird, der von dem Digit und allen zuvor eingegebenen, höheren Digits festgelegt wird.

# FIG. 1

EP 0 272 090 B1

# FIG. 2A

# FIG. 2B

(A)

50 — CHANGE SECOND DIGIT OF FRAME DISPLAY DATA AT PREDETERMINED TIMING

51 — IS COMMAND "d" FOR SECOND DIGIT SUPPLIED ? — NO → (B)

YES

52 — OUTPUT

53 — OUTPUT DRIVING DATA "abcd5"

54 — IS CLEAR KEY PRESSED ? — YES

55 — STOP DRIVING DATA OUTPUT

NO

56 — CHANGE DISPLAY FOR FIRST DISPLAY OF FRAME DISPLAY DATA

57 — IS COMMAND "e" FOR FIRST DIGIT SUPPLIED ? — NO

YES

58 — OUTPUT FRAME DISPLAY DATA "abcde"

59 — OUTPUT DRIVING DATA "abcde"

60 — IS CLEAR KEY PRESSED ? — YES

61 — STOP DRIVING DATA OUTPUT

NO

62 — IS SEARCH KEY PRESSED ? — NO

YES

END